# EUROPEAN PATENT APPLICATION

(11) **EP 4 134 812 A2**
(43) Date of publication of application: **15.02.2023**
(21) Application number: 22206879.3
(22) Date of filing: 11.11.2022
(51) Int. Cl.: G06F 3/16

(54) **METHOD AND APPARATUS OF DISPLAYING INFORMATION, ELECTRONIC DEVICE AND STORAGE MEDIUM**

(30) Priority: 11.11.2021 CN 202111335995
(71) Applicant: Apollo Intelligent Connectivity (Beijing) Technology Co., Ltd., Beijing 100176 (CN)
(72) Inventor: ZUO, Shengyong, Beijing, 100176 (CN)
(74) Representative: Stöckeler, Ferdinand

(57) **Abstract**

The present disclosure provides a method and an apparatus of displaying information, an electronic device and a storage medium, which relate to a field of computer technology, and in particular to fields of autonomous driving, autonomous parking, Internet of Vehicles, intelligent transportation and intelligent cockpit. The method includes: determining, in response to receiving an interaction request for a virtual personal assistance unit, a target area in which the interaction request is generated; determining, from a plurality of display units, a target display unit corresponding to the target area; and displaying, by using the target display unit, relevant information of the virtual personal assistance unit requested to be accessed by the interaction request.

## Description

### TECHNICAL FIELD

The present disclosure relates to a field of computer technology, in particular to fields of autonomous driving, autonomous parking, Internet of Vehicles, intelligent transportation and intelligent cockpit. Specifically, the present disclosure relates to a method and an apparatus of displaying information, an electronic device and a storage medium.

### BACKGROUND

Virtual Personal Assistance (VPA) is a software agent that may perform a task or a service on behalf of a person. With the development of computer and Internet of Things technology, VPA has been applied to many aspects of life.

### SUMMARY

The present disclosure provides a method and an apparatus of displaying information, an electronic device and a storage medium.

According to an aspect of the present disclosure, a method of displaying information is provided, including: determining, in response to receiving an interaction request for a virtual personal assistance unit, a target area in which the interaction request is generated; determining, from a plurality of display units, a target display unit corresponding to the target area; and displaying, by using the target display unit, relevant information of the virtual personal assistance unit requested to be accessed by the interaction request.

According to another aspect of the present disclosure, an apparatus of displaying information is provided, including: a first determination module configured to determine, in response to receiving an interaction request for a virtual personal assistance unit, a target area in which the interaction request is generated; a second determination module configured to determine, from a plurality of display units, a target display unit corresponding to the target area; and a display module configured to display, by using the target display unit, relevant information of the virtual personal assistance unit requested to be accessed by the interaction request.

According to another aspect of the present disclosure, an electronic device is provided, including: at least one processor; and a memory communicatively connected to the at least one processor, the memory stores instructions executable by the at least one processor, and the instructions, when executed by the at least one processor, cause the at least one processor to implement the above-mentioned method of displaying information.

According to another aspect of the present disclosure, a non-transitory computer-readable storage medium having computer instructions stored thereon is provided, the computer instructions are configured to cause a computer to implement the above-mentioned method of displaying information.

According to another aspect of the present disclosure, a computer program product containing a computer program is provided, the computer program, when executed by a processor, causes the processor to implement the above-mentioned method of displaying information.

It should be understood that content described in this section is not intended to identify key or important features in the embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used to understand the present disclosure better and do not constitute a limitation to the present disclosure, in which:
FIG. 1 schematically shows an exemplary system architecture to which a method and an apparatus of displaying information may be applied according to an embodiment of the present disclosure;
FIG. 2 schematically shows a flowchart of a method of displaying information according to an embodiment of the present disclosure;
FIG. 3 schematically shows a schematic diagram of a vehicle-machine scene according to an embodiment of the present disclosure;
FIG. 4 schematically shows a flowchart for determining that VPA is displayed on a screen for driver or a screen for front passenger according to an embodiment of the present disclosure;
FIG. 5 schematically shows a block diagram of an apparatus of displaying information according to an embodiment of the present disclosure; and
FIG. 6 schematically shows a block diagram of an example electronic device for implementing an embodiment of the present disclosure.

### DETAILED DESCRIPTION OF EMBODIMENTS

Exemplary embodiments of the present disclosure will be described below with reference to the accompanying drawings, which include various details of the embodiments of the present disclosure to facilitate understanding and should be considered as merely exemplary. Therefore, those of ordinary skilled in the art should realize that various changes and modifications may be made to the embodiments described herein without departing from the scope and spirit of the present disclosure. Likewise, for clarity and conciseness, descriptions of well-known functions and structures are omitted in the following description.

In the technical solution of the present disclosure, the collection, storage, use, processing, transmission, provision and disclosure of the user's personal information involved are all in compliance with relevant laws and regulations, necessary confidentiality measures have been taken, which are not violate public order and good customs.

According to the seat arrangement in a vehicle, seats in the vehicle may be divided into at least one of a driver seat, a front passenger seat, a rear seat, and the like. The driver seat may refer to a seat for a driver, e.g. a seat in a front row of the vehicle, a seat on a left side of the front row of the vehicle, and a seat on a right side of the front row of the vehicle. The front passenger seat may refer to a seat for a passenger who is in the same row as the driver. The rear seat may include all seats occupied by passengers in a row different from the row where the driver locates.

Most of the vehicles with Internet of Vehicles function develop and display a VPA image based on one central control screen or based on a VPA robot installed on an IP console (a center console or an instrument panel), to display the VPA image, but both of which are mainly used to satisfy the driver to use a product function of the VPA. Due to a long distance, it may be very inconvenient for the front passenger to use the VPA. However, with the accelerated development of intelligent cockpit solutions, a multi-screen for driver and front passenger and multi-screen technology have become a trend. In addition to being displayed on the central control screen, the VPA further needs to be displayed on a screen for front passenger. However, when is the VPA displayed on the screen for driver and when is the VPA displayed on the screen for front passenger is an important issue that needs to be solved.

In the process of achieving the concept of the present disclosure, the inventor found that the VPA is only displayed on the central control screen or the IP console, which only considers the use of the driver. It is very inconvenient for the front passenger or other passengers to use the VPA. A dynamic switching and display of the VPA cannot be achieved.

In this regard, according to the present disclosure and embodiments of the present disclosure, it is determined whether a voice area currently used to wake up the VPA is a driver wake-up area or a front passenger wake-up area by combining the sound source localization technology of voice. If the driver wakes up the VPA, the VPA may be displayed on the central control screen. On the contrary, the VPA may be displayed on the screen for front passenger, so as to satisfy a good product experience of using the VPA for both the driver and the front passenger.

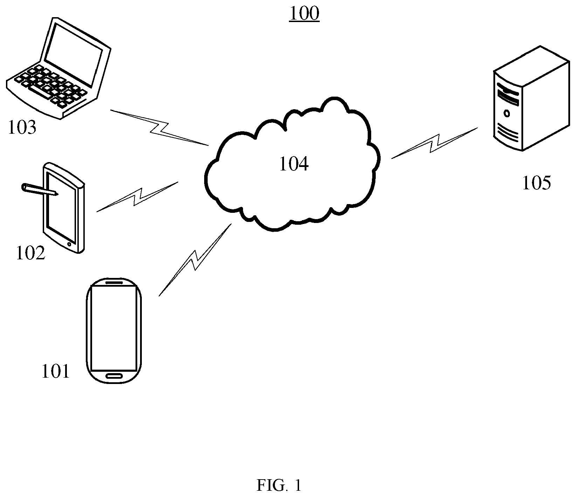

FIG. 1 schematically shows an exemplary system architecture to which a method and an apparatus of displaying information may be applied according to an embodiment of the present disclosure.

It should be noted that FIG. 1 is only an example of a system architecture to which the embodiments of the present disclosure may be applied, so as to help those skilled in the art to understand the technical content of the present disclosure, but it does not mean that the embodiments of the present disclosure cannot be used for other device, system, environment or scene. For example, in another embodiment, the exemplary system architecture to which the method and the apparatus of displaying information may be applied may include a terminal device. However, the terminal device may implement the method and the apparatus of displaying information provided by the embodiments of the present disclosure without interacting with a server.

As shown in FIG. 1, a system architecture 100 according to this embodiment may include terminal devices 101, 102 and 103, a network 104 and a server 105. The network 104 is a medium used to provide a communication link between the terminal devices 101, 102 and 103 and the server 105. The network 104 may include various connection types, such as a wired and/or a wireless communication link, and the like.

A user may use the terminal devices 101, 102 and 103 to interact with the server 105 through the network 104 to receive or send a message and the like. Various communication client applications may be installed on the terminal devices 101, 102 and 103, such as a knowledge reading application, a web browser application, a search application, an instant messaging tool, an email client and/or a social platform software, etc. (only example).

The terminal devices 101, 102 and 103 may be various electronic devices with a display screen and supporting web browsing, including but not limited to a vehicle-mounted smart screen, a home smart screen, a smart speaker, a smart phone, a tablet computer, a laptop computer and a desktop computer, etc.

The server 105 may be a server that provides various services, such as a background management server (just an example) that provides support for the content browsed by the user using the terminal devices 101, 102 and 103. The background management server may analyze and process a received user request and other data, and feedback a processing result (such as a web page, information, or data acquired or generated according to the user request) to the terminal device. The server may be a cloud server, further referred to as a cloud computing server or a cloud host, which is a host product in the cloud computing service system to solve shortcomings of difficult management and weak business scalability in conventional physical host and VPS (Virtual Private Server) service. The server may also be a server of a distributed system, or a server combined with a blockchain.

It should be noted that, the method of displaying information provided by the embodiments of the present disclosure may generally be executed by the terminal device 101, 102 or 103. Correspondingly, the apparatus of displaying information provided by the embodiments of the present disclosure may further be disposed in the terminal device 101, 102 or 103.

Alternatively, the method of displaying information provided by the embodiments of the present disclosure may also be generally executed by the server 105. Correspondingly, the apparatus of displaying information provided by the embodiments of the present disclosure may generally be disposed in the server 105. The method of displaying information provided by the embodiments of the present disclosure may also be executed by a server or a server cluster that is different from the server 105 and may communicate with the terminal devices 101, 102, 103 and/or the server 105. Correspondingly, the apparatus of displaying information provided by the embodiments of the present disclosure may also be disposed in the server or the server cluster that is different from the server 105 and may communicate with the terminal devices 101, 102, 103 and/or the server 105.

For example, when relevant information of a VPA unit needs to be displayed, the terminal devices 101, 102 and 103 may provide a display unit and the VPA unit. The server 105 may determine, in response to receiving an interaction request for a virtual personal assistance unit, a target area in which the interaction request is generated, determine, from a plurality of display units, a target display unit corresponding to the target area, and display, by using the target display unit, relevant information of the virtual personal assistance unit requested to be accessed by the interaction request. Alternatively, the display unit and the VPA unit are provided by the server or the server cluster capable of communicating with the terminal devices 101, 102, 103 and/or the server 105, so as to achieve displaying, by using the target display unit, relevant information of the virtual personal assistance unit requested to be accessed by the interaction request.

It should be understood that the number of terminal devices, networks and servers in FIG. 1 are merely illustrative. There may be any number of terminal devices, networks and servers as required.

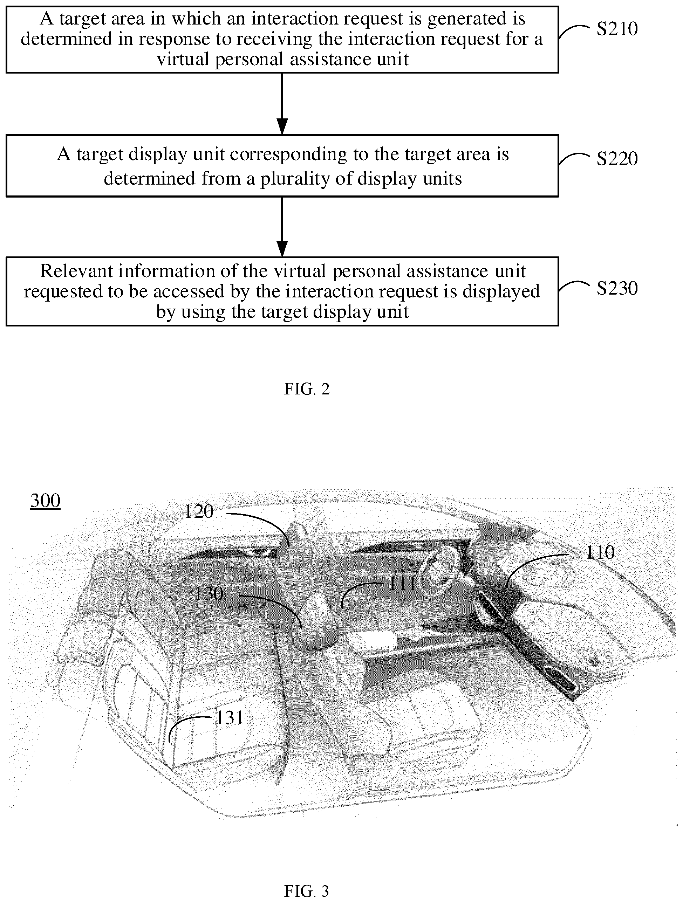

FIG. 2 schematically shows a flowchart of a method of displaying information according to an embodiment of the present disclosure.

As shown in FIG. 2, the method includes operations S210 to S230.

In operation S210, a target area in which an interaction request is generated is determined in response to receiving the interaction request for a virtual personal assistance unit.

In operation S220, a target display unit corresponding to the target area is determined from a plurality of display units.

In operation S230, relevant information of the virtual personal assistance unit requested to be accessed by the interaction request is displayed by using the target display unit.

According to an embodiment of the present disclosure, the interaction request may include at least one of a voice request issued by a person in the vehicle, a touch request for the display screen made by the person in the vehicle, and the like.

According to an embodiment of the present disclosure, for example, a vehicle-machine system may include at least one of the central control screen, the screen for driver, the screen for front passenger, a dual screen, a vehicle-mounted smart speaker, and the like. The plurality of display units may include image and video display devices such as display screens provided by at least one of the central control screen, the screen for driver, the screen for front passenger and the dual screen. The plurality of display units may also include an audio display device provided by the vehicle-mounted smart speaker, which are not limited here. It should be noted that each display screen and/or smart speaker in the vehicle-machine system share one SOC (System on Chip).

According to an embodiment of the present disclosure, the target area may include an area where a person or a device that triggers the interaction request is located. The target display unit may include at least one of a display unit disposed in the target area, a display unit having the smallest distance to the target area among the plurality of display units, and a display unit having a preset corresponding relationship with the target area.

According to an embodiment of the present disclosure, an independent VPA module or an independently displayed VPA floating window may be created in the vehicle-machine system to display the VPA image and at least one of related voice interaction vertical. The voice interaction vertical may include some requirements or implementations related to a vertical field of the voice interaction. When the user sends an interaction request for the VPA, the SOC in the vehicle-machine system may receive the interaction request and determine a target area in which the interaction request is generated in response to the interaction request. The SOC in the vehicle-machine system may further determine a target display unit corresponding to the target area from a plurality of display units, so as to run the VPA in the target display unit and display relevant information of the VPA in the target display unit, thereby achieving a simplified display of VPA.

According to an embodiment of the present disclosure, when the display unit is the smart speaker, a display result of the VPA may be expressed in a form of outputting smart voice. When the display unit is various display screens, the display result of the VPA may be expressed in a form of displaying the VPA floating window and related interactive operations in the display screen.

According to an embodiment of the present disclosure, the method for determining the target display unit used to display the VPA may include at least one of random selection determination, customized configuration determination according to the in-car environment, etc., in addition to determining according to a generation area of the interaction request. The way to determine the customized configuration according to the in-car environment may be shown as, for example, detecting the seating position of the personnel in the vehicle. When the personnel in the vehicle are seated in the positions of the driver seat and the front passenger seat, the target display unit used to display the VPA may be determined as the screen for driver, the screen for front passenger, the dual screen or the vehicle-mounted smart speaker. When the seating position of the personnel in the vehicle includes at least two of the driver seat, the front passenger seat and the rear seat, the target display unit used to display the VPA may be determined as the dual screen or the vehicle-mounted smart speaker.

According to the above-mentioned embodiments of the present disclosure, since the relevant information of the VPA unit is displayed only in the target display unit corresponding to the target area in which the interaction request is generated, design cost may be reduced and the user-friendliness may be improved.

The method shown in FIG. 2 will be further described below with reference to specific embodiments.

According to an embodiment of the present disclosure, determining, from the plurality of display units, the target display unit corresponding to the target area includes: determining, from the plurality of display units, a display unit having the smallest distance to the target area; and determining the display unit having the smallest distance to the target area as the target display unit.

FIG. 3 schematically shows a schematic diagram of a vehicle-machine scene according to an embodiment of the present disclosure.

As shown in FIG. 3, for example, the interior of a vehicle 300 may include multiple display units such as display screens 110, 120, and 130, and the display screen 110 may be the dual screen.

According to an embodiment of the present disclosure, when a user on the driver seat sends the interaction request for the VPA, the target area related to the generation of the interaction request may be determined as an area 111. A target display unit having the smallest distance to the area 111 may be determined as the display screen 110. Since the display screen 110 is the dual screen, the VPA floating window may be displayed in a part of the display screen 110 that is biased towards the driver seat. When a user on the front passenger seat sends the interaction request for the VPA, the VPA floating window may be displayed in a part of the display screen 110 that is biased towards the front passenger seat. When a user on the rear seat sends the interaction request for the VPA, for example, when a user on a rear seat area 131 sends the interaction request for the VPA, the VPA floating window may be displayed in the display screen 130.

According to an embodiment of the present disclosure, when different users send interaction requests for the VPA at different moments, a display screen to display the VPA floating window may be dynamically switched according to an area where the user sending the interaction request is located. For example, if there is an interaction request sent by the user on the driver seat, the VPA floating window may be displayed in the display screen 110 first in response to the interaction request. When the VPA floating window is displayed in the display screen 110, for example, if it is detected that the user on the rear seat area 131 sends a next interaction request, the VPA floating window displayed in the display screen 110 may be switched to the display screen 130 for display.

Through the above-mentioned embodiments of the present disclosure, the relevant information of the VPA unit may be dynamically displayed on a display unit closest to a user who generates the interaction request for the VPA unit, thereby effectively improving the user-friendliness of the VPA unit when the VPA is used.

According to an embodiment of the present disclosure, the interaction request includes a voice request. Determining the target area in which the interaction request is generated may include: determining, based on a sound source localization technology, the target area in which the voice request is generated.

According to an embodiment of the present disclosure, an independent background service used to support the VPA may be created in the vehicle-machine system, which may provide algorithm and logic support for rendering a 3D image of the VPA. An independent background service used to support a voice engine may further be created in the vehicle-machine system. This service may encapsulate a core algorithm layer and a general control layer such as voice wake-up, recognition, semantic analysis, and voiceprint. The VPA floating window may be created separately, so that VPA animation may be displayed through the window, and a display container may be provided for a voice interactive panel and a vertical display.

According to an embodiment of the present disclosure, when a user in the vehicle sends a voice request to wake up or use the VPA, it may be dynamically determined, based on the voice engine and according to the sound source localization technology and voice region determination technology, which area of the vehicle the current voice request comes from. When it is determined that the current voice is from the driver, the VPA floating window may be displayed on the screen for driver, or on a part of the dual screen close to a driver area. On the contrary, the VPA floating window may be displayed on the screen for front passenger, or on a part of the dual screen close to a front passenger area.

Through the above-mentioned embodiments of the present disclosure, the target area related to the generation of the voice request is determined based on the sound source localization technology. Then the display area of the VPA unit is determined, which may achieve the intelligent interaction between the user and the VPA unit, thereby further improving the user-friendliness of the VPA unit when it is used.

According to an embodiment of the present disclosure, displaying, by using the target display unit, the relevant information of the virtual personal assistance unit requested to be accessed by the interaction request may include: acquiring a display routine used to control a display position of the virtual personal assistance unit; determining identification information of the target display unit; and configuring the identification information into the display routine, so that the relevant information of the virtual personal assistance unit is displayed by the target display unit corresponding to the identification information.

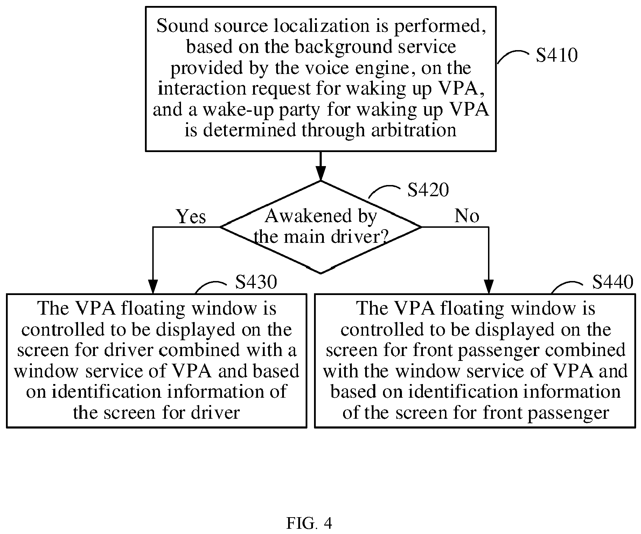

FIG. 4 schematically shows a flowchart for determining that VPA is displayed on a screen for driver or a screen for front passenger according to an embodiment of the present disclosure.

As shown in FIG. 4, the method includes operations S410 to S440.

In operation S410, sound source localization is performed, based on the background service provided by the voice engine, on the interaction request for waking up VPA, and a wake-up party for waking up VPA is determined through arbitration.

In operation S420, whether the VPA is awakened by the driver is determined. If the VPA is awakened by the driver, operation S430 is performed; if the VPA is not awakened by the driver, operation S440 is performed.

In operation S430, the VPA floating window is controlled to be displayed on the screen for driver combined with a window service of VPA and based on identification information of the screen for driver.

In operation S440, the VPA floating window is controlled to be displayed on the screen for front passenger combined with the window service of VPA and based on identification information of the screen for front passenger.

According to an embodiment of the present disclosure, for example, for a VPA window that needs to be displayed on the screen for driver, a displayidi for the driver (the identification information of the screen for driver) and the relevant information of the VPA floating window may be configured into a window service of the vehicle-machine system, including a show method of configuring the displayidi for the driver into a window used to represent the VPA floating window, which may achieve the display of the VPA floating window on the screen for driver. For a VPA window that needs to be displayed on the screen for front passenger, a displayid₂ for the front passenger (the identification information of the screen for front passenger) and the VPA floating window may be configured into the window service of the vehicle-machine system, including a show method of configuring the displayid₂ for the front passenger into the window used to represent the VPA floating window, which may achieve the dynamic display of the VPA floating window on the screen for front passenger.

Using the above-mentioned embodiments of the present disclosure may improve the user experience of a VPA product, and ensure that the user may use and experience, in real-time and at low cost, a VPA function in various areas where VPA may be displayed.

According to an embodiment of the present disclosure, the display unit may include at least one of a screen for driver, a screen for front passenger, a dual screen for driver and front passenger and a central control screen of a vehicle-machine system, which is not limited here.

Using the above-mentioned embodiments of the present disclosure may achieve the dynamic switching of VPA in the vehicle-machine display screen, improve the user experience of the VPA product in the vehicle-machine system, and ensure that users at all positions in the vehicle may use and experience the VPA function in real-time and at low cost.

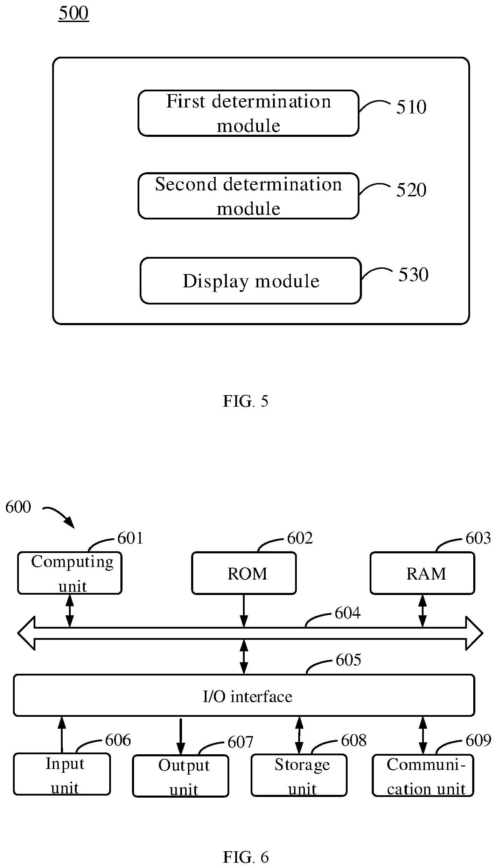

FIG. 5 schematically shows a block diagram of an apparatus of displaying information according to an embodiment of the present disclosure.

As shown in FIG. 5, an apparatus 500 of displaying information includes a first determination module 510, a second determination module 520 and a display module 530.

The first determination module 510 is used to determine, in response to receiving an interaction request for a virtual personal assistance unit, a target area in which the interaction request is generated.

The second determination module 520 is used to determine, from a plurality of display units, a target display unit corresponding to the target area.

The display module 530 is used to display, by using the target display unit, relevant information of the virtual personal assistance unit requested to be accessed by the interaction request.

According to an embodiment of the present disclosure, the second determination module includes a first determination unit and a second determination unit.

The first determination unit is used to determine, from the plurality of display units, a display unit having the smallest distance to the target area.

The second determination unit is used to determine the display unit having the smallest distance to the target area as the target display unit.

According to an embodiment of the present disclosure, the interaction request includes a voice request. The first determination includes a third determination unit.

The third determination unit is used to determine, based on a sound source localization technology, the target area in which the voice request is generated.

According to an embodiment of the present disclosure, the display module includes an acquisition unit, a fourth determination unit and a configuration unit.

The acquisition unit is used to acquire a display routine configured to control a display position of the virtual personal assistance unit.

The fourth determination unit is used to determine identification information of the target display unit.

The configuration unit is used to configure the identification information into the display routine, so that the relevant information of the virtual personal assistance unit is displayed by the target display unit corresponding to the identification information.

According to an embodiment of the present disclosure, the display unit includes at least one of a screen for driver, a screen for front passenger, a dual screen for driver and front passenger and a central control screen of a vehicle-machine system.

According to an embodiment of the present disclosure, the present disclosure further provides an electronic device, a readable storage medium, and a computer program product.

According to an embodiment of the present disclosure, the electronic device includes at least one processor; and a memory communicatively connected to the at least one processor, the memory stores instructions executable by the at least one processor, and the instructions, when executed by the at least one processor, cause the at least one processor to implement the above-mentioned method of displaying information.

According to an embodiment of the present disclosure, a non-transitory computer-readable storage medium having computer instructions stored thereon is provided, the computer instructions are configured to cause a computer to implement the above-mentioned method of displaying information.

According to an embodiment of the present disclosure, a computer program product containing a computer program is provided, the computer program, when executed by a processor, causes the processor to implement the above-mentioned method of displaying information.

FIG. 6 shows a schematic block diagram of an exemplary electronic device 600 for implementing the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 6, the device 600 may include a computing unit 601, which may perform various appropriate actions and processing based on a computer program stored in a read-only memory (ROM) 602 or a computer program loaded from a storage unit 608 into a random access memory (RAM) 603. Various programs and data required for the operation of the device 600 may be stored in the RAM 603. The computing unit 601, the ROM 602 and the RAM 603 are connected to each other through a bus 604. An input/output (I/O) interface 605 is further connected to the bus 604.

Various components in the device 600, including an input unit 606 such as a keyboard, a mouse, etc., an output unit 607 such as various types of displays, speakers, etc., a storage unit 608 such as a magnetic disk, an optical disk, etc., and a communication unit 609 such as a network card, a modem, a wireless communication transceiver, etc., are connected to the I/O interface 605. The communication unit 609 allows the device 600 to exchange information/data with other devices through a computer network such as the Internet and/or various telecommunication networks.

The computing unit 601 may be various general-purpose and/or special-purpose processing components with processing and computing capabilities. Some examples of the computing unit 601 include but are not limited to a central processing unit (CPU), a graphics processing unit (GPU), various dedicated artificial intelligence (AI) computing chips, various computing units running machine learning model algorithms, a digital signal processor (DSP), and any appropriate processor, controller, microcontroller, and so on. The computing unit 601 may perform the various methods and processes described above, such as the method of displaying information. For example, in some embodiments, the method of displaying information may be implemented as a computer software program that is tangibly contained on a machine-readable medium, such as a storage unit 608. In some embodiments, part or all of a computer program may be loaded and/or installed on the device 600 via the ROM 602 and/or the communication unit 609. When the computer program is loaded into the RAM 603 and executed by the computing unit 601, one or more steps of the method of displaying information described above may be performed. Alternatively, in other embodiments, the computing unit 601 may be configured to perform the method of displaying information in any other appropriate way (for example, by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

Program codes for implementing the method of the present disclosure may be written in any combination of one or more programming languages. These program codes may be provided to a processor or a controller of a general-purpose computer, a special-purpose computer, or other programmable data processing devices, so that when the program codes are executed by the processor or the controller, the functions/operations specified in the flowchart and/or block diagram may be implemented. The program codes may be executed completely on the machine, partly on the machine, partly on the machine and partly on the remote machine as an independent software package, or completely on the remote machine or the server.

In the context of the present disclosure, the machine readable medium may be a tangible medium that may contain or store programs for use by or in combination with an instruction execution system, device or apparatus. The machine readable medium may be a machine-readable signal medium or a machine-readable storage medium. The machine readable medium may include, but not be limited to, electronic, magnetic, optical, electromagnetic, infrared or semiconductor systems, devices or apparatuses, or any suitable combination of the above. More specific examples of the machine readable storage medium may include electrical connections based on one or more wires, portable computer disks, hard disks, random access memory (RAM), read-only memory (ROM), erasable programmable read-only memory (EPROM or flash memory), optical fiber, convenient compact disk read-only memory (CD-ROM), optical storage device, magnetic storage device, or any suitable combination of the above.

In order to provide interaction with users, the systems and techniques described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, a server of a distributed system, or a server combined with a blockchain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method of displaying information, comprising:
determining (S210), in response to receiving an interaction request for a virtual personal assistance unit, a target area in which the interaction request is generated;
determining (S220), from a plurality of display units, a target display unit corresponding to the target area; and
displaying (S230), by using the target display unit, relevant information of the virtual personal assistance unit requested to be accessed by the interaction request.

2. The method according to claim 1, wherein determining (S220), from the plurality of display units, the target display unit corresponding to the target area comprises:
determining, from the plurality of display units, a display unit having the smallest distance to the target area; and
determining the display unit having the smallest distance to the target area as the target display unit.

3. The method according to claim 1, wherein the interaction request comprises a voice request, and determining the target area in which the interaction request is generated comprises:
determining (S210), based on a sound source localization technology, the target area in which the voice request is generated.

4. The method according to any one of claims 1 to 3, wherein displaying (S230), by using the target display unit, the relevant information of the virtual personal assistance unit requested to be accessed by the interaction request comprises:
acquiring a display routine configured to control a display position of the virtual personal assistance unit;
determining identification information of the target display unit; and
configuring the identification information into the display routine, so that the relevant information of the virtual personal assistance unit is displayed by the target display unit corresponding to the identification information.

5. The method according to any one of claims 1 to 4, wherein the display unit comprises at least one of a screen for driver, a screen for front passenger, a dual screen for driver and front passenger and a central control screen of a vehicle-machine system.

6. An apparatus (500) of displaying information, comprising:
a first determination module (510) configured to determine, in response to receiving an interaction request for a virtual personal assistance unit, a target area in which the interaction request is generated;
a second determination module (520) configured to determine, from a plurality of display units, a target display unit corresponding to the target area; and
a display module (530) configured to display, by using the target display unit, relevant information of the virtual personal assistance unit requested to be accessed by the interaction request.

7. The apparatus (500) according to claim 6, wherein the second determination module (520) comprises:
a first determination unit configured to determine, from the plurality of display units, a display unit having the smallest distance to the target area; and
a second determination unit configured to determine the display unit having the smallest distance to the target area as the target display unit.

8. The apparatus (500) according to claim 6, wherein the interaction request comprises a voice request, and the first determination module (510) comprises:
a third determination unit configured to determine, based on a sound source localization technology, the target area in which the voice request is generated.

9. The apparatus (500) according to any one of claims 6 to 8, wherein the display module (530) comprises:
an acquisition unit configured to acquire a display routine configured to control a display position of the virtual personal assistance unit;
a fourth determination unit configured to determine identification information of the target display unit; and
a configuration unit configured to configure the identification information into the display routine, so that the relevant information of the virtual personal assistance unit is displayed by the target display unit corresponding to the identification information.

10. The apparatus (500) according to any one of claims 6 to 9, wherein the display unit comprises at least one of a screen for driver, a screen for front passenger, a dual screen for driver and front passenger and a central control screen of a vehicle-machine system.

11. An electronic device (600), comprising:
at least one processor; and
a memory communicatively connected to the at least one processor, wherein the memory stores instructions executable by the at least one processor, and the instructions, when executed by the at least one processor, cause the at least one processor to implement the method of any one of the claims 1 to 5.

12. A non-transitory computer-readable storage medium having computer instructions stored thereon, wherein the computer instructions are configured to cause a computer to implement the method of any one of claims 1 to 5.

13. A computer program product containing a computer program, wherein the computer program, when executed by a processor, causes the processor to implement the method of any one of claims 1 to 5.
